# EUROPEAN PATENT APPLICATION

(11) **EP 1 621 683 A2**
(43) Date of publication of application: **01.02.2006**
(21) Application number: 05106410.3
(22) Date of filing: 13.07.2005
(51) Int. Cl.: E02F 9/16

(54) **Driver's cabin of construction machine**

(30) Priority: 22.07.2004 JP 2004214595; 22.07.2004 JP 2004214596
(71) Applicant: KOBELCO CONSTRUCTION MACHINERY CO., LTD., Hiroshima-shi, Hiroshima (JP)
(72) Inventor: KOJIMA, Kenta, Hiroshima-shi, Hiroshima (JP); ISHIBASHI, Chuichi, Hiroshima-shi, Hiroshima (JP); MURAKAMI, Masaaki, Hiroshima-shi, Hiroshima (JP); FUJIMOTO, Satoshi, Hiroshima-shi, Hiroshima (JP)
(74) Representative: Bailey, David Martin

(57) **Abstract**

A cabin frame (21) for a cabin (4) of a construction machine includes a combination of a posterior frame body (A) having a predetermined strength and an anterior frame body (B) disposed in front thereof. The posterior frame body (A) defines a common element that is used in common between different machine models, whereas the anterior frame body (B) defines an adjustment element such that its dimension in a front-back direction of the construction machine is determined according to the corresponding machine model. Another cabin frame (21) includes a combination of an anterior frame body (B) defining a common element used in common between three machine models, namely, a model with an operator-protecting function, a low-tare model with an operator-protecting function, and a high-tare model with an operator-protecting function; and a posterior frame body (A) defining a replaceable element having a predetermined strength selected from a plurality of strengths set for the corresponding machine models.

## Description

### BACKGROUND OF THE INVENTION

### 1. Field of the Invention

The present invention relates to a driver's cabin of a construction machine.

### 2. Description of the Related Art

Known art of a driver's cabin of a construction machine is a frame type in which a cabin frame formed of a pipe material is provided with attachments, such as a door and windowpanes. All components included in the cabin frame need to have uniform strength and rigidity.

On the other hand, a hydraulic excavator, which is a type of a construction machine, includes an upper rotatable body. There are three models of hydraulic excavators, which are a standard model in which the back side of the upper rotatable body protrudes from the machine in the width direction when the body rotates; a short tail-swing radius model in which the back side of the upper rotatable body does not protrude from the machine in the width direction when the body rotates; and an ultra compact swing model in which not only the back side of the upper rotatable body but also an attachment unit in an erected state do not protrude from the machine in the width direction. Specifically, an excavator of the short tail-swing radius model has zero tail swing overhang from crawlers, or has no overhang tail from crawlers while swing can be made the most of when used in a work site.

Since the dimension of the upper rotatable body is different according to each machine model with respect to the front-back direction of the machine, the dimension of the cabin, which is disposed on the upper rotatable body, is also different according to each machine model in the front-back direction.

In this case, for each machine model, if the corresponding type of cabin frame having a dimension different from the other types in the front-back direction is separately designed and assembled together, the manufacturing costs become high. In order to solve this problem, Japanese Unexamined Patent Application Publication No. 2000-96615, for example, discloses a technology in which an element of the cabin frame is used in common between the different machine models, and a remaining element is replaceable according to each machine model.

In this case, however, since the replaceable element of the cabin frame is replaced solely in view that a part of the cabin does not protrude from the machine in the width direction when the upper rotatable body rotates, the strength and rigidity of the cabin frame may vary between the machine models. In other words, this deviates from the objective of maintaining sufficient strength and rigidity of the cabin frame for keeping a housing space for an operator to protect the operator inside the cabin when the machine is involved in a rollover (overturn). Consequently, this is problematic in that the strength and rigidity of the posterior part of the cabin frame that provides the housing space may be lower depending on the machine model.

There are two types of cabins, which are an operator-protection-equipped type that protects an operator by reducing the magnitude of deformation in the part of the cabin that defines the housing space for the operator when the machine is involved in a rollover (overturn); and a type that does not have such an operator-protecting function.

The operator-protection-equipped type requires sufficient strength for maintaining the housing space during a rollover, whereas the type without an operator-protecting function may have relatively lower strength.

Furthermore, in the cabin of the operator-protection-equipped type, the load acting on the cabin during a rollover varies depending on the tare weight of the machine. In view of this, Japanese Unexamined Patent Application Publication No. 2004-42739, for example, discloses different types of cabins having different strengths that correspond to machine models of different tare weights. As a result, there are a total of three or more types of cabins including the type without the operator-protecting function.

In this case, different types of cabin frames with different strengths must be manufactured such that each type has strength suitable for the corresponding machine model. As a result, this leads to higher manufacturing costs.

Moreover, in a high-tare model that has an operator-protecting function, the cross-sectional strength of the components included in the cabin frame must entirely be increased. This is problematic in that the weight of the cabin becomes large.

### SUMMARY OF THE INVENTION

Accordingly, it is an object of the present invention to provide a cabin of a construction machine which includes a cabin frame whose element is used in common between different machine models and which achieves secure protection of an operator in each of the models even when the machine is involved in a rollover. Furthermore, it is another object of the present invention to provide a low-cost, lightweight cabin of a construction machine in which the cabin is provided with strength suitable for the corresponding model.

A cabin of a construction machine according to an aspect of the present invention basically has the following structure.

Specifically, the cabin has a cabin frame that includes a combination of a posterior frame body having sufficient strength for maintaining a housing space for an operator when the construction machine is involved in a rollover; and an anterior frame body disposed in front of the posterior frame body. The posterior frame body defines a common element that is used in common between different machine models, whereas the anterior frame body defines an adjustment element such that a dimension of the anterior frame body in a front-back direction of the construction machine is determined according to a corresponding one of the machine models.

In this case, the posterior frame body of the cabin frame, which houses an operator, has sufficient strength for maintaining the housing space for the operator even when the construction machine is involved in a rollover, and is used in common between the different machine models. On the other hand, the anterior frame body defines the adjustment element such that the dimension of the anterior frame body in the front-back direction is determined according to the corresponding machine model. Accordingly, the operator is securely protected in all of the models in which the posterior frame body is used in common.

Furthermore, a cabin of a construction machine according to another aspect of the present invention basically has the following structure.

Specifically, the cabin has a cabin frame that includes a combination of a posterior frame body and an anterior frame body disposed in front of the posterior frame body. The anterior frame body defines a common element that is used in common between different machine models, whereas the posterior frame body defines a replaceable element having a predetermined strength selected from a plurality of strengths set for the corresponding machine models.

In this frame-type cabin, since the cabin frame is a combination of the anterior frame body and the posterior frame body, only the posterior frame body needs to be replaced according to the corresponding machine model. Accordingly, in comparison with a case where different types of cabin frames are entirely and individually manufactured so that each type of cabin frame can be replaced with another type according to the corresponding model, the manufacturing costs can be significantly reduced. Furthermore, in a cabin of a high-tare model, since only the posterior frame body needs to be replaced, the weight of the cabin frame (or the weight of the entire cabin) can be made lighter in comparison with a case where the cabin frame is entirely replaced with one that has large weight.

### BRIEF DESCRIPTION OF THE DRAWINGS

Fig. 1 is a perspective view illustrating the structure of a cabin frame according to a first embodiment of the present invention;
Fig. 2 is an exploded perspective view of the cabin frame according to the first embodiment;
Fig. 3 is a plan view of the cabin frame according to the first embodiment;
Fig. 4 is a side view of the cabin frame according to the first embodiment;
Fig. 5 illustrates a deformation state of the cabin frame according to the first embodiment due to a lateral load, as viewed from the back of the cabin frame;
Fig. 6 is a perspective view of a cabin frame according to a second embodiment of the present invention;
Fig. 7 is a perspective view of a cabin frame according to a third embodiment of the present invention;
Fig. 8 is a perspective view of a cabin frame according to a fourth embodiment of the present invention;
Fig. 9 is a perspective view of a cabin frame according to a fifth embodiment of the present invention;
Fig. 10 is a perspective view of a cabin frame according to a sixth embodiment of the present invention;
Fig. 11 is an exploded perspective view of a cabin frame according to a seventh embodiment of the present invention;
Fig. 12 is a plan view illustrating the structure of a cabin frame according to an eighth embodiment of the present invention in which the eighth embodiment is described by referring to Fig. 1;
Figs. 13A to 13C are cross-sectional views illustrating three types of steel materials having different wall thicknesses, the steel materials being used as components of the posterior frame body;
Figs. 14A to 14C are cross-sectional views illustrating three types of steel materials used as the components of the posterior frame body of a cabin frame according to a ninth embodiment of the present invention;
Fig. 15 is a schematic side view of a hydraulic excavator in which the present invention is applied; and
Fig. 16 is a plan view of the hydraulic excavator.

### DESCRIPTION OF THE PREFERRED EMBODIMENTS

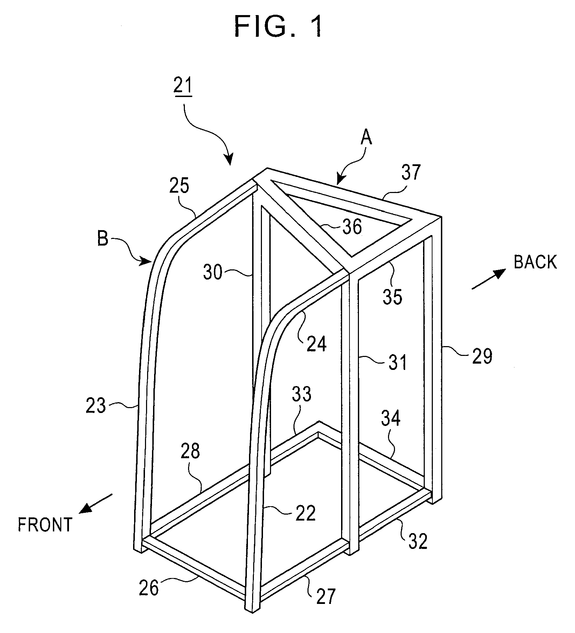

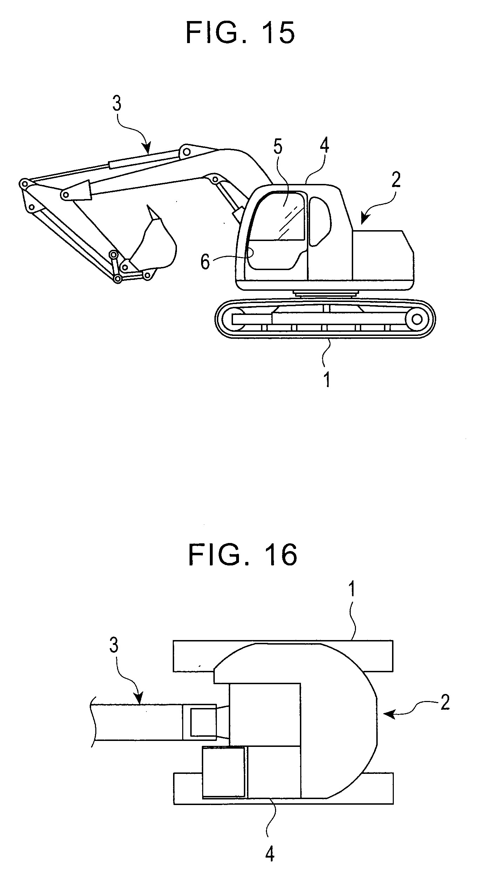

Embodiments of a cabin of a construction machine according to the present invention will now be described with reference to Figs. 1 to 14C. Figs. 15 and 16 are a schematic side view and plan view, respectively, of a hydraulic excavator defining a construction machine in which the cabin according to the present invention is applied.

Referring to Figs. 15 and 16, the hydraulic excavator includes a crawler-type lower traveling body 1; an upper rotatable body 2 disposed on the lower traveling body 1 in a rotatable manner about a vertical axis; and an operation attachment unit 3 attached to the upper rotatable body 2. The upper rotatable body 2 is provided with a cabin 4.

Generally, referring to Fig. 16, when viewed from a position of an operator seated inside the cabin 4, the operation attachment unit 3 is positioned closer to the right side of the upper rotatable body 2, whereas the cabin 4 is positioned at the left side. These terms "left" and "right" will be used below to indicate the directions of the construction machine. The left side surface of the cabin 4 is provided with an entrance 6, which can be opened and closed with a door 5.

First to seventh embodiments, which will be described below, are examples in which the cabin 4 is frame-based and has a cabin frame 21 that is applicable to two models of excavators, such as a standard model and a short tail-swing radius model. As mentioned earlier, an excavator of the short tail-swing radius model has zero tail swing overhang from crawlers, or has no overhang tail from crawlers while swing can be made the most of when used in a work site.

The cabin frame 21 in each embodiment is provided with a posterior frame body A having sufficient strength and rigidity for maintaining a housing space for an operator even when the construction machine is involved in a rollover; and an anterior frame body B disposed in front of the posterior frame body A. The posterior frame body A defines a common element that can be used in common in both machine models, whereas the anterior frame body B defines an adjustment element such that the dimension of the anterior frame body B in the front-back direction is determined according to the corresponding machine model. The cabin frame 21 is formed by combining together the posterior frame body A and the anterior frame body B.

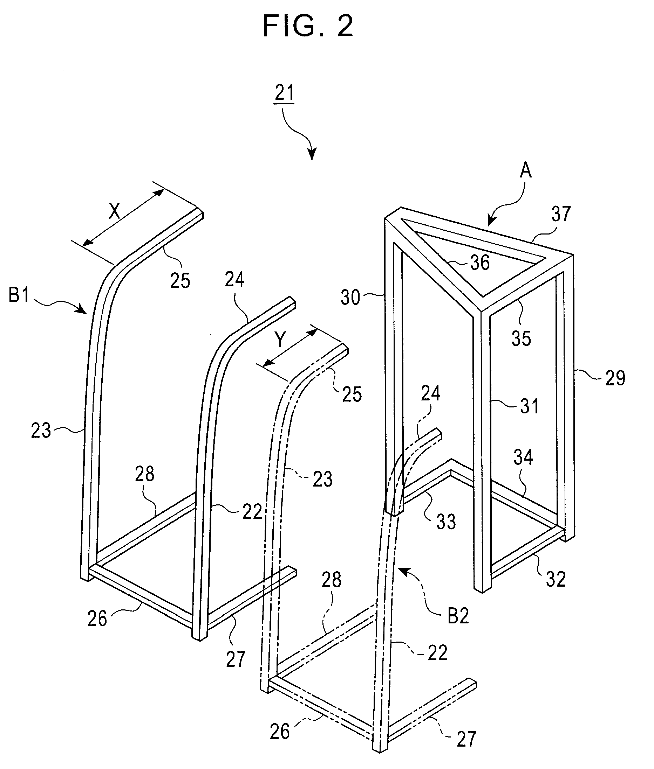

In the embodiments described below, as shown in, for example, Figs. 2 to 4, the anterior frame body B is given a reference character B1 if the anterior frame body B is to be installed in the standard model, whereas the anterior frame body B is given a reference character B2 if the anterior frame body B is to be installed in the short tail-swing radius model.

### First Embodiment

Referring to Figs. 1 to 5, the cabin frame 21 according to the first embodiment will be described. In the cabin frame 21 according to the first embodiment, the anterior frame body B (B1, B2) defining the adjustment element includes left and right front pillars 22, 23 whose upper portions are curved backward; left and right roof segments 24, 25 extending backward horizontally from the upper portions of the respective front pillars 22, 23; a lower-front bridge segment 26 bridged between lower ends of the front pillars 22, 23; and left and right lower-front frame segments 27, 28 attached horizontally to back surfaces of the lower ends of the front pillars 22, 23.

On the other hand, the posterior frame body A defining the common element includes left and right rear pillars 29, 30; a central pillar 31 disposed between the left rear pillar 29 and the left front pillar 22 of the anterior frame body B; a left lower-rear frame segment 32 bridged between lower ends of the central pillar 31 and the left rear pillar 29; a right lower-rear frame segment 33 attached horizontally to a back surface of the right rear pillar 30; and a lower-rear bridge segment 34 bridged between a rear end of the lower-rear frame segment 33 and the lower end of the left rear pillar 29. The front and back directions are indicated by corresponding arrows in Fig. 1, and the terms "front" and "back" will be similarly used below to indicate the directions of the cabin 4.

The central pillar 31 of the posterior frame body A and the front pillar 22 and the roof segment 24 of the anterior frame body B constitute the entrance 6 shown in Fig. 15.

The central pillar 31 may be disposed at the left side of the cabin frame 21 and in the middle of the left side with respect to the front-back direction, or may be disposed slightly towards the front or the back with respect to the middle.

In plan view, the central pillar 31 and the left and right rear pillars 29, 30 are positioned at apexes of a triangle. The upper ends of these pillars 29 to 31 have frame segments 35, 36, 37 integrally bridged therebetween, such that the frame segments 35, 36, 37 define a connection unit that connect these upper ends to form a triangle in plan view.

In this case, the use of the frame segments 35, 36, 37 as the connection unit in the posterior frame body A contributes to an overall weight reduction of the posterior frame body A, and is especially advantageous in view of achieving a lightweight cabin 4.

Accordingly, the posterior frame body A has a portal-like structure that is asymmetrical in the left-right direction and that is triangular in plan view. Alternatively, such a portal-like structure may be symmetrical in the left-right direction.

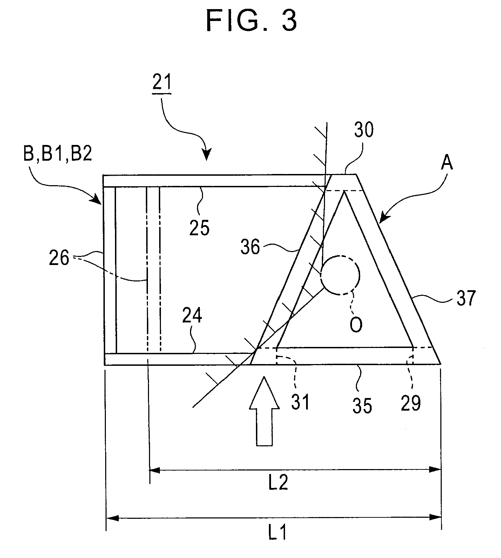

Referring to Fig. 3, the right rear pillar 30 is disposed at the right side of the cabin frame 21 and is aligned with the center of the space formed between the central pillar 31 and the left rear pillar 29 with respect to the front-back direction, such that the posterior frame body A forms an isosceles triangle in plan view.

Since the central pillar 31 and the left and right rear pillars 29, 30 are positioned such that the posterior frame body A does not form a right triangle in plan view, the posterior frame body A has higher strength and rigidity against twisting in comparison with a posterior frame body that forms a right triangle in plan view. Accordingly, this advantageously improves a deformation-reducing effect.

As an alternative to prismatic pipes in the drawings used as the components of the posterior frame body A and the anterior frame body B, cylindrical pipes or C-shaped pipes, for example, may be used. As a further alternative, these different types of pipes may be used according to different sections of the cabin frame 21.

Referring to Fig. 2, the anterior frame body B defining the adjustment element may be selected from one of first and second anterior frame body types B1 and B2.

Depending on the type of cabin 4 (i.e. standard model or short tail-swing radius model), the corresponding anterior frame body type B1 or B2 is selected. The horizontal segments in the first anterior frame body type B1, i.e. the left and right roof segments 24, 25 and the lower-front frame segments 27, 28, have dimensions different from those in the second anterior frame body type B2 with respect to the front-back direction. Reference characters X, Y in Fig. 2 each indicate an example of a dimension of the right roof segment 25 in the front-back direction. The horizontal segments define joint segments that are integrally joined with the posterior frame body A by, for example, welding.

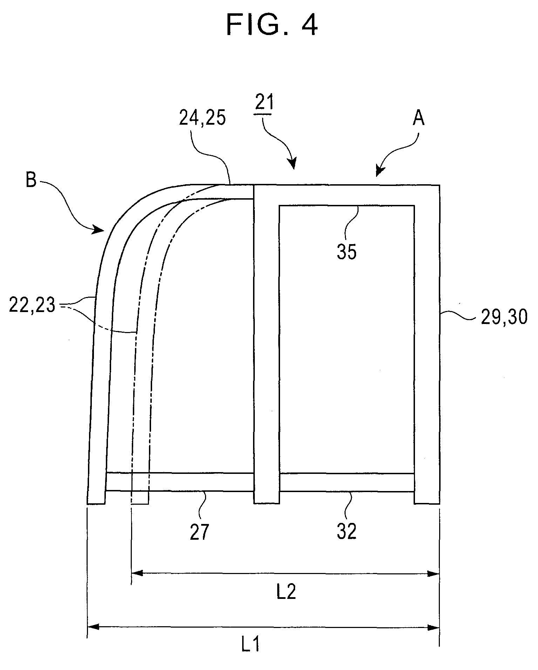

Consequently, referring to Figs. 3 and 4, for a standard model, the first anterior frame body type B1 is selected such that the cabin frame 21 has a relatively large dimension L1 in the front-back direction. On the other hand, for a short tail-swing radius model, the second anterior frame body type B2 is selected such that the cabin frame 21 has a relatively small dimension L2 in the front-back direction. Other attachments shown in Fig. 15, such as the door 5, exterior panels, and windowpanes, are attached so as to form the cabin 4.

Accordingly, the posterior frame body A, which houses an operator, has sufficient strength and rigidity for maintaining the housing space for an operator even when the construction machine is involved in a rollover, and moreover, can be used in common between the two different machine models. On the other hand, the anterior frame body B is changed according to the corresponding machine model (according to the dimension of the cabin 4 in the front-back direction). Consequently, this achieves secure protection of an operator in both machine models in which the posterior frame body A can be used in common.

Due to the fact that the posterior frame body A defining the common element has a portal-like structure, when the construction machine is involved in a rollover, a lateral load applied to the left side, which is indicated by a double-line arrow in Fig. 3, is intensively received by the posterior frame body A. Thus, the posterior frame body entirely A becomes deformed.

In this case, since the central pillar 31 is disposed at the side with the entrance 6 upon which the lateral load directly acts, the lateral load is properly transmitted to the posterior frame body A. Thus, the deformation-reducing effect can be effectively applied.

Furthermore, the triangular shape in plan view that includes the central pillar 31 contributes to higher transmissibility of the load and also maximizes the strength of each component. Consequently, this achieves high strength and high rigidity of the posterior frame body A, whereby a high load-supporting function (especially, high strength against twisting) can be attained in the entire structure of the posterior frame body A.

In addition, due to having an isosceles triangle in plan view, the posterior frame body A achieves maximum strength against twisting with respect to posterior frame bodies with other types of triangles in plan view, meaning that the posterior frame body A has a least deformable structure. Accordingly, this further contributes to secure protection of an operator.

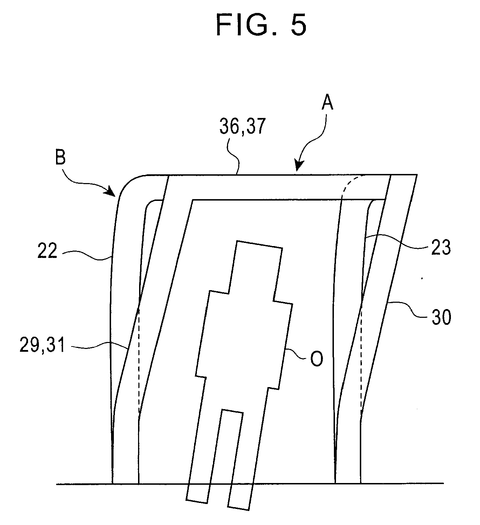

With respect to the load-supporting function of the posterior frame body A in the first embodiment, Fig. 5 illustrates the magnitude of deformation based on an observational study in a case where the lateral load indicated by the double-line arrow in Fig. 3 is applied to the posterior frame body A.

In Fig. 5, the deformation state of the posterior frame body A is illustrated as viewed from the back. It is clear from Fig. 5 that the components of the posterior frame body A, namely, the central pillar 31 and the left and right rear pillars 29, 30, are deformed uniformly, whereas the components that are not included in the posterior frame body A, such as the left and right front pillars 22, 23 of the anterior frame body B, are hardly deformed. In other words, it is evident from the drawing that the load is intensively received by the posterior frame body A, and that the load is transmitted to each component of the posterior frame body A such that the entire posterior frame body A is deformed. In the drawing, reference character O indicates an operator inside the cabin 4.

Furthermore, the cabin frame 21 has the following advantages.
i. With a minimum number of components, the posterior frame body A achieves strength and rigidity necessary for maintaining the housing space for an operator.
ii. The anterior frame body B may have relatively lower strength since the posterior frame body A having a portal-like structure intensively receives a lateral load applied to the cabin frame 21 when the construction machine is involved in a rollover. Consequently, the anterior frame body B requires a less number of components and a smaller cross-sectional dimension.

According to these two advantages, both frame bodies A, B are made lighter in weight, thereby achieving a lightweight structure of the entire cabin 4.

Furthermore, due to the fact that the number of components in the anterior frame body B (B1, B2) is minimized and that the cross-sectional dimension of the anterior frame body B is smaller than that of the posterior frame body A, the front visual range and the lateral visual range required during an operation of the machine are maximized. In Fig. 3, the shaded portion indicates the visual range of the operator O inside the cabin 4. Accordingly, while achieving the basic object of protecting the operator O during a rollover, the present invention also achieves a wider front visual range and lighter weight.

### Other Embodiments

Regarding the descriptions of other embodiments, only the differences from the first embodiment will be described below.

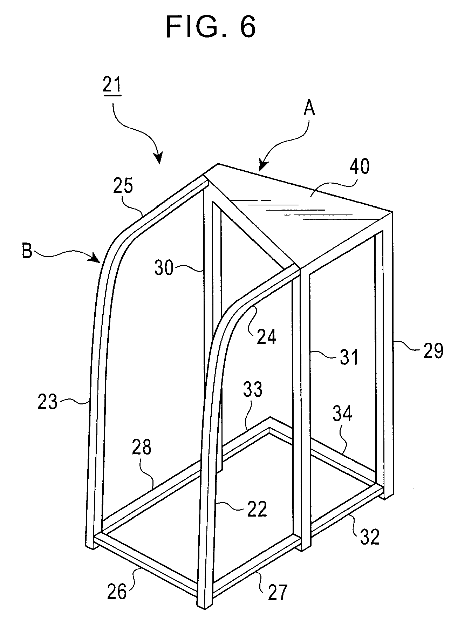

A second embodiment shown in Fig. 6 basically has the same frame structure as the first embodiment, but the connection unit included in the posterior frame body A is defined by a triangular plate portion 40 that is integrally disposed over the upper ends of the pillars 29 to 31.

According to this structure, the posterior frame body A is slightly heavier than that in the first embodiment, but has higher overall strength. Furthermore, unlike the first embodiment in which the connection unit is defined by the plurality of frame segments 35 to 37, the second embodiment only requires a single connection member as the connection unit, whereby the assembly process is simplified.

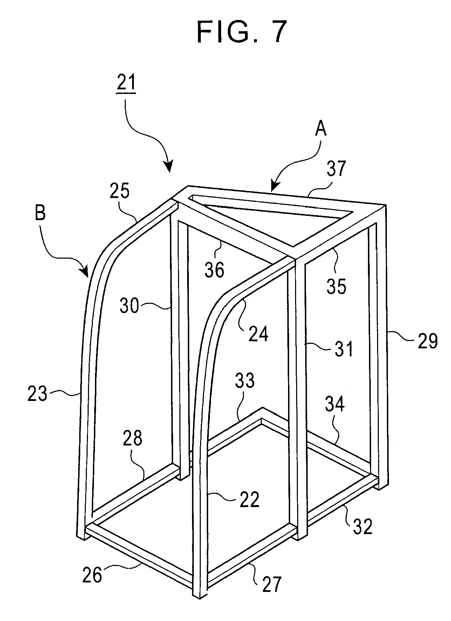

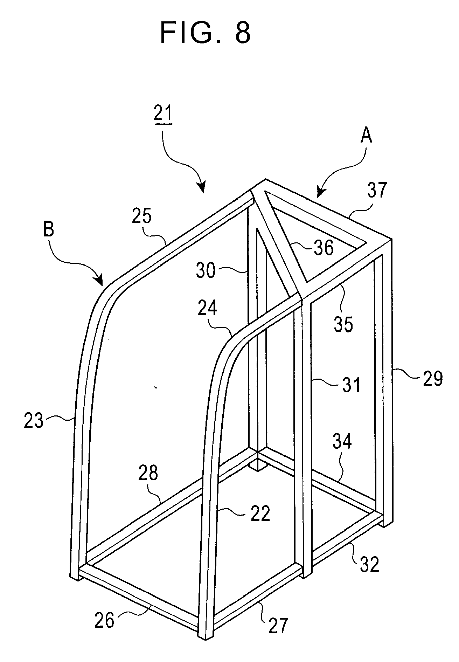

In third and fourth embodiments shown in Figs. 7 and 8, respectively, the position of the right rear pillar 30 included in the posterior frame body A is different from that in the first embodiment with respect to the front-back direction. Specifically, in the third embodiment, the right rear pillar 30 is aligned with the central pillar 31 in a direction perpendicular to the front-back direction (namely, the right rear pillar 30 is positioned substantially in the middle of the cabin 4 in the front-back direction). On the other hand, in the fourth embodiment, the right rear pillar 30 is aligned with the left rear pillar 29 in the direction perpendicular to the front-back direction.

According to these structures, a load-supporting function similar to that in the first embodiment is achieved.

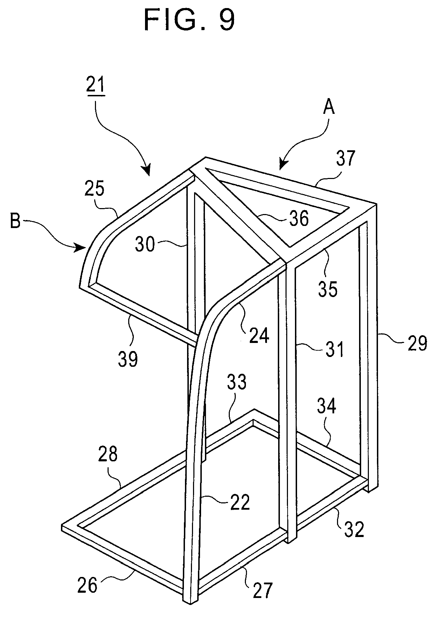

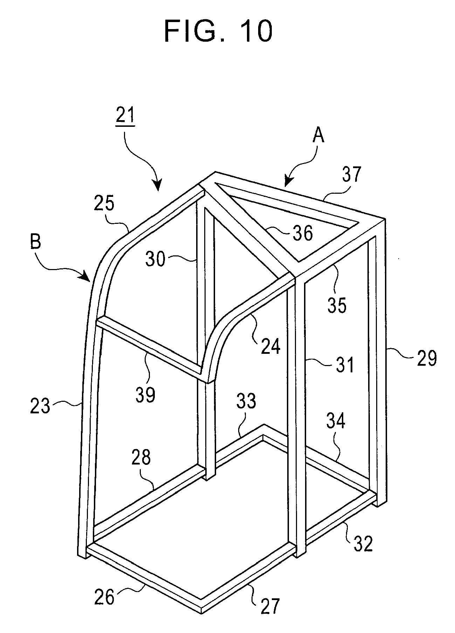

Figs. 9 and 10 respectively illustrate fifth and sixth embodiments in which the frame structure of the anterior frame body B is a modification of that of the first embodiment.

In the fifth embodiment, the right front pillar 23 provided in the first embodiment is omitted, whereas in the sixth embodiment, the left front pillar 22 provided in the first embodiment is omitted. On the other hand, each of the fifth and sixth embodiments is additionally provided with an upper-front bridge segment 39 that extends parallel to the lower-front bridge segment 26.

Accordingly, since high strength and high rigidity are not necessarily required in the anterior frame body B, the positioning pattern of the components in the anterior frame body B can be selected from a wide range of options in view of, for example, a better visual range and lighter weight.

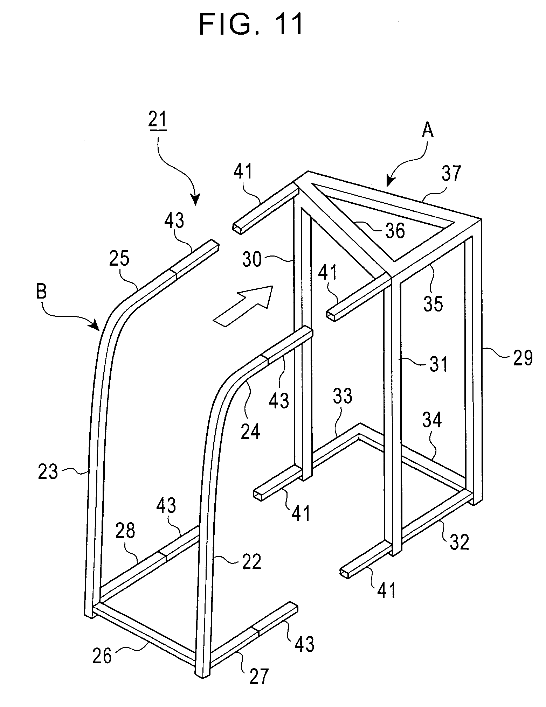

A seventh embodiment will now be described with reference to Fig. 11.

In the first embodiment, the first anterior frame body type B1 applicable to the standard model and the second anterior frame body type B2 applicable to the short tail-swing radius model are manufactured separately, such that the frame body type B1 or B2 is installed according to the corresponding machine model. In contrast, according to the seventh embodiment, the anterior frame body B also defines a common element that can be used in common between the two machine models. In this case, when the anterior frame body B is to be combined with the posterior frame body A, the dimension of the anterior frame body B is adjusted in the front-back direction based on the corresponding machine model.

Specifically, the rear end portions of the horizontal segments of the anterior frame body B, namely, the rear end portions of the left and right roof segments 24, 25 and the left and right lower-front frame segments 27, 28, are provided with front joint portions 43 extending backward in the horizontal direction. On the other hand, the front surface portions of the posterior frame body A, namely, the front surface portions of the upper and lower ends of the central pillar 31 and the upper and lower ends of the right rear pillar 30, are provided with rear joint portions 41 protruding forward in the horizontal direction.

The front and back joint portions 43 and 41 have a prismatic-pipe shape like the other components of the frame bodies A and B, and are fitted to each other so that the frame bodies A and B are combined together.

In this case, the amount of insertion (i.e. the amount of overlap) between the joint portions 43 and 41 is adjustable such that the dimension of the entire cabin frame 21 in the front-back direction can be set according to the corresponding machine model.

According to this structure, since both the posterior frame body A and the anterior frame body B can be used in common between the two machine models, the manufacturing costs can be reduced.

Alternatively, instead of having a prismatic-pipe shape, the joint portions 43, 41 may have a cylindrical-pipe shape. As a further alternative, one of the set of front joint portions 43 and the set of rear joint portions 41 may have a prismatic-pipe shape or a cylindrical-pipe shape, and the other set of front joint portions 43 or rear joint portions 41 may have a prismatic or cylindrical rod shape or a prismatic or cylindrical plate shape that is engageable with the one of the set of front joint portions 43 and the set of rear joint portions 41. As a further alternative, the two sets of joint portions 43 and 41 may both have a plate shape, such that the two sets are joined to each other in an overlapping fashion.

Although the central pillar 31 is disposed at the left side of the cabin frame 21 in the above embodiments, the central pillar 31 is preferably disposed at the right side of the cabin frame 21 if the entrance 6 is provided at the right side.

Furthermore, although the posterior frame body A has a portal-like structure that is triangular in plan view according to the above embodiments, the posterior frame body A may alternatively have other types of portal-like structures, such as a portal-like structure that is rectangular in plan view by being provided with an additional pillar. As a further alternative, only the upper surface portion of the posterior frame body A may be, for example, rectangular in plan view.

Furthermore, although the present invention is applicable to two machine models, i.e. the standard model and the short tail-swing radius model, in the above embodiments, the present invention may alternatively be applicable to three machine models, namely, the standard model, the short tail-swing radius model, and an ultra compact swing model, or may be applicable to more than three machine models.

The following descriptions are directed to embodiments in which the cabin frame 21 of the frame-structured cabin 4 is applicable to three models of construction machines listed below, which are:
a) a model that does not have an operator-protecting function;
b) a low-tare model that has an operator-protecting function; and
c) a high-tare model that has an operator-protecting function.

As will be described later in detail, there are cases where the wall thickness of the cabin frame in the embodiments below is different from that in the above embodiments. However, if the overall structure is the same as the above embodiments, the embodiments below may be described by referring to the same drawings used for describing the above embodiments.

For different purposes, Fig. 1 and Figs. 6 to 10 will be used in order to describe an eighth embodiment according to the present invention.

Referring to Fig. 1, the cabin frame 21 according to the eighth embodiment is provided with the posterior frame body A; and the anterior frame body B disposed in front of the posterior frame body A. The anterior frame body B defines the common element used in common between different machine models, whereas the posterior frame body A defines a replaceable element having a predetermined strength selected from a plurality of strengths set for the corresponding machine models. The cabin frame 21 is formed by combining these frame bodies A, B together. In other words, the eighth embodiment is different from the first embodiment in that the anterior frame body B in the eighth embodiment defines the common element and the posterior frame body A defines the replaceable element.

The anterior frame body B defining the common element includes the left and right front pillars 22, 23 whose upper portions are curved backward; the left and right roof segments 24, 25 extending backward horizontally from the upper portions of the respective front pillars 22, 23; the lower-front bridge segment 26 bridged between the lower ends of the front pillars 22, 23; and the left and right lower-front frame segments 27, 28 attached horizontally to the back surfaces of the lower ends of the front pillars 22, 23.

On the other hand, the posterior frame body A defining the replaceable element includes the left and right rear pillars 29, 30; the central pillar 31 disposed between the left rear pillar 29 and the left front pillar 22 of the anterior frame body B; the left lower-rear frame segment 32 bridged between the lower ends of the central pillar 31 and the left rear pillar 29; the right lower-rear frame segment 33 attached horizontally to the back surface of the right rear pillar 30; and the lower-rear bridge segment 34 bridged between the rear end of the lower-rear frame segment 33 and the lower end of the left rear pillar 29.

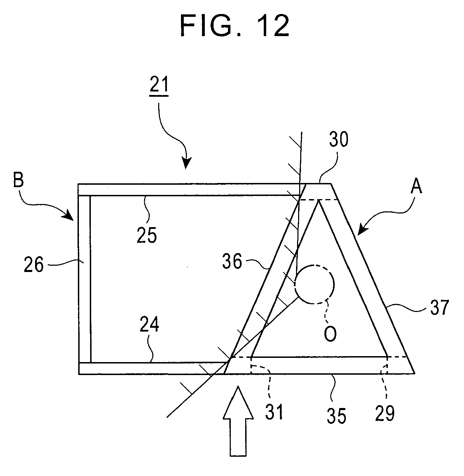

The right rear pillar 30 is disposed at the right side of the cabin frame 21 and is aligned with the center of the space formed between the central pillar 31 and the left rear pillar 29 with respect to the front-back direction, such that the posterior frame body A forms an isosceles triangle in plan view as shown in Fig. 12.

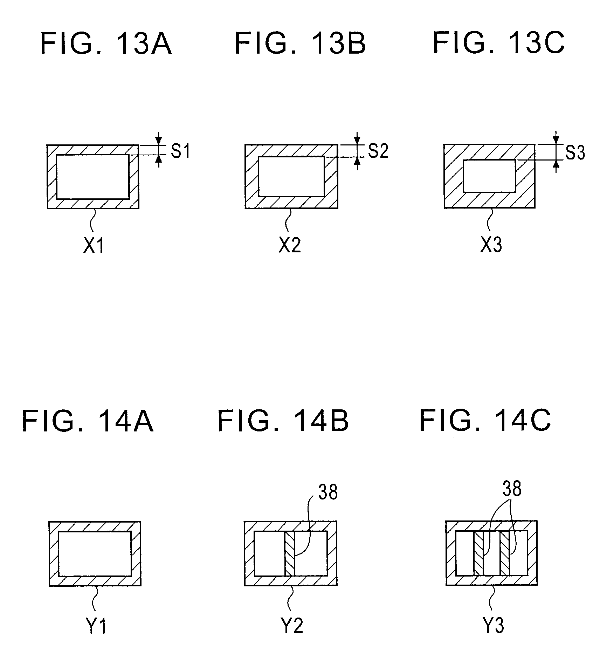

Regarding the components constituting the posterior frame body A, the model that does not have an operator-protecting function is provided with a first steel material X1 having relatively the smallest wall thickness S1, as shown in Fig. 13A, of the three models subject to an application of the eighth embodiment. On the other hand, the low-tare model that has an operator-protecting function is provided with a second steel material X2 having an intermediate wall thickness S2 shown in Fig. 13B. Furthermore, the high-tare model that has an operator-protecting function is provided with a third steel material X3 having the largest wall thickness S3 shown in Fig. 13C.

According to these different wall thicknesses, three types of components having the same outer dimension and different cross-sectional strengths can be manufactured. Thus, these different types of components enable manufacturing of three body types of posterior frame bodies A that have relatively low, intermediate, and high strengths, respectively, and that are suitable for the three corresponding models. Each of the three body types of posterior frame bodies A can be used in accordance with the corresponding model.

For the cabin frame 21 used in the models with an operator-protecting function, the cross-sectional strength of the components in the posterior frame body A is set such that the cabin 4 has sufficient strength for maintaining the housing space for the operator O when the construction machine is involved in a rollover.

Consequently, the front section of the cabin frame 21 is defined by the anterior frame body B that can be used in common between different models, whereas the rear section of the cabin frame 21 that provides the housing space is defined by the posterior frame body A, which is the replaceable element having a predetermined strength selected from a plurality of strengths set for the corresponding machine models. Since the cabin frame 21 is formed by combining the two frame bodies A and B together, if the cabin frame 21 is to be used in another model, only the posterior frame body A needs to be replaced with a body type that has a strength suitable for that model.

Accordingly, in comparison with a case where different types of cabin frames 21 are entirely and individually manufactured so that each type of cabin frame 21 can be replaced with another type according to the corresponding model, the manufacturing costs can be significantly reduced.

On the other hand, in the cabin 4 of the high-tare model that has an operator-protecting function, since only the posterior frame body A needs to be replaced, the weight of the cabin frame 21 can be made lighter in comparison with a case where the cabin frame 21 is entirely replaced with one that has high strength and large weight.

Furthermore, according to this frame structure, since the posterior frame body A defining a strength element has a portal-like structure, a lateral load (indicated by a double-line arrow in Fig. 12) applied to the left side of the cabin 4 with an operator-protecting function during a rollover is intensively received by the posterior frame body A. Thus, the posterior frame body entirely A becomes deformed.

In this case, due to the fact that the central pillar 31 is disposed at the side with the entrance 6 upon which the lateral load directly acts, the lateral load is properly transmitted to the posterior frame body A. Thus, the deformation-reducing effect can be effectively applied.

Furthermore, since the posterior frame body A is triangular in plan view, the transmissibility of the load is improved and the strength of each component is maximized. Consequently, a high load-supporting function (especially, high strength against twisting) can be attained in the entire structure of the posterior frame body A.

In addition, due to having an isosceles triangle in plan view, the posterior frame body A achieves maximum strength against twisting with respect to posterior frame bodies with other types of triangles in plan view, meaning that the posterior frame body A has a least deformable structure.

Accordingly, the posterior frame body A achieves the required strength and rigidity with a minimum number of components, such that the weight of the posterior frame body A itself is reduced. As a result, this contributes to a weight reduction of the cabin frame 21, thereby achieving a lightweight structure of the entire cabin 4.

Furthermore, since high strength is not necessarily required in the anterior frame body B, the anterior frame body B requires only a minimum number of components and may have a cross-sectional dimension smaller than that of the posterior frame body A. Thus, the front visual range and the lateral visual range required during an operation of the machine are maximized. In Fig. 12, the shaded portion indicates the visual range of the operator O inside the cabin 4.

Figs. 14A to 14C illustrate a ninth embodiment of the present invention, which provides means for changing the cross-sectional strength of the components of the posterior frame body A according to each model. In the ninth embodiment, the posterior frame body A for the model that does not have an operator-protecting function is formed of a first steel material Y1 having a prismatic-pipe shape without any specific reinforcements. On the other hand, the posterior frame body A for the low-tare model that has an operator-protecting function is formed of a second steel material Y2 having a prismatic-pipe shape inside which a single reinforcement member 38 is provided. Furthermore, the posterior frame body A for the high-tare model that has an operator-protecting function is formed of a third steel material Y3 having a prismatic-pipe shape inside which a pair of the reinforcement members 38, 38 is provided.

Accordingly, due to having or not having the reinforcement member(s) 38, the three models are given different cross-sectional strengths. Thus, three different types of posterior frame bodies A that respectively have low, intermediate, and high cross-sectional strengths corresponding to the three models can be attained.

The reinforcement member(s) 38 may be formed integrally with the prismatic pipe, or may be attached afterwards to the prismatic pipe by, for example, welding.

Alternatively, instead of being based on the number of reinforcement members 38 provided, the different cross-sectional strengths among the three models may be achieved by giving different wall thicknesses among the three models. As a further alternative, all the models may be equipped with the reinforcement member(s) 38, such that the different cross-sectional strengths among the three models may be achieved based on the number of reinforcement members 38 and the different wall thicknesses.

On the other hand, as alternative means for changing the cross-sectional strength of the components of the posterior frame body A according to each model, the posterior frame body A in all three models may have the same wall thickness but different outer dimensions (i.e. cross-sectional dimensions), or may have both different wall thicknesses and different outer dimensions.

Furthermore, each component in the posterior frame body A may be formed of a cylindrical pipe instead of a prismatic pipe, or may be formed of a steel member other than pipes, such as a C-shaped channeled member or an angled member. As a further alternative, these different types of members may be used according to different sections of the posterior frame body A.

A tenth embodiment according to the present invention will now be described. Due to having the same overall structure as that shown in Fig. 6, the tenth embodiment will be described by referring to Fig. 6.

Referring to Fig. 6, the tenth embodiment basically has the same frame structure as the eighth embodiment, but the connection unit connecting the pillars 29 to 31 of the posterior frame body A is defined by the triangular plate portion 40 integrally disposed over the upper ends of the pillars 29 to 31.

According to this structure, the posterior frame body A is slightly heavier than that in the eighth embodiment, but has higher overall strength. Furthermore, unlike the eighth embodiment in which the connection unit is defined by the plurality of frame segments 35 to 37, the tenth embodiment only requires a single connection member as the connection unit, whereby the assembly process is simplified.

Eleventh and twelfth embodiments according to the present invention will now be described. Due to having the same overall structure as that shown in Figs. 7 and 8, the eleventh and twelfth embodiments will be described by referring to Figs. 7 and 8.

Referring to Figs. 7 and 8, in the eleventh and twelfth embodiments, the position of the right rear pillar 30 included in the posterior frame body A is different from that in the eighth embodiment with respect to the front-back direction. Specifically, in the eleventh embodiment, the right rear pillar 30 is aligned with the central pillar 31 in a direction perpendicular to the front-back direction (namely, the right rear pillar 30 is positioned substantially in the middle of the cabin 4 in the front-back direction). On the other hand, in the twelfth embodiment, the right rear pillar 30 is aligned with the left rear pillar 29 in the direction perpendicular to the front-back direction.

According to these structures, a load-supporting function similar to that in the eighth embodiment is achieved.

Thirteenth and fourteenth embodiments according to the present invention will now be described. Due to having the same overall structure as that shown in Figs. 9 and 10, the thirteenth and fourteenth embodiments will be described by referring to Figs. 9 and 10.

Referring to Figs. 9 and 10, the thirteenth and fourteenth embodiments are examples in which the frame structure of the anterior frame body B is a modification of that of the eighth embodiment.

In the thirteenth embodiment, the right front pillar 23 provided in the eighth embodiment is omitted, whereas in the fourteenth embodiment, the left front pillar 22 provided in the eighth embodiment is omitted. On the other hand, each of the thirteenth and fourteenth embodiments is additionally provided with the upper-front bridge segment 39 that extends parallel to the lower-front bridge segment 26.

Accordingly, since high strength and high rigidity are not necessarily required in the anterior frame body B, the positioning pattern of the components in the anterior frame body B can be selected from a wide range of options in view of, for example, a better visual range and lighter weight.

Although the central pillar 31 of the posterior frame body A is disposed at the left side of the cabin frame 21 in the above embodiments, the central pillar 31 is preferably disposed at the right side of the cabin frame 21 if the entrance 6 is provided at the right side.

Furthermore, although the posterior frame body A has a portal-like structure that is triangular in plan view according to the eighth to fourteenth embodiments, the posterior frame body A may alternatively have other types of portal-like structures, such as a portal-like structure that is rectangular in plan view by being provided with an additional pillar. As a further alternative, only the upper surface portion of the posterior frame body A may be, for example, rectangular in plan view.

Furthermore, although the eighth to fourteenth embodiments are applicable to three machine models, namely, the model without the operator-protecting function, the low-tare model with the operator-protecting function, and the high-tare model with the operator-protecting function, the models with the operator-protecting function may alternatively be divided into three or more models such that these embodiments may be applicable to a total or four or more machine models.

Although the invention has been described with reference to the preferred embodiments in the attached figures, it is noted that equivalents may be employed and substitutions made herein without departing from the scope of the invention as recited in the claims.

## Claims

1. A cabin of a construction machine, wherein the cabin includes a cabin frame comprising:
a posterior frame body having sufficient strength for maintaining a housing space for an operator when the construction machine is involved in a rollover, the posterior frame body defining a common element that is used in common between different machine models; and
an anterior frame body disposed in front of the posterior frame body, the anterior frame body defining an adjustment element such that a dimension of the anterior frame body in a front-back direction of the construction machine is determined according to a corresponding one of the machine models.

2. The cabin of the construction machine according to Claim 1, wherein the posterior frame body includes at least a central pillar disposed at one of left and right sides of the cabin and in the middle of said one of left and right sides with respect to the front-back direction; left and right rear pillars respectively disposed at the left and right sides and positioned behind the central pillar with respect to the front-back direction; and a connection unit for connecting upper ends of the central pillar and the left and right rear pillars,
wherein the central pillar, the left and right rear pillars, and the connection unit of the posterior frame body constitute a portal-like structure that is triangular in plan view.

3. The cabin of the construction machine according to Claim 2, wherein the connection unit of the posterior frame body comprises frame segments integrally bridged between the upper ends of the central pillar and the left and right rear pillars.

4. The cabin of the construction machine according to Claim 2, wherein the connection unit of the posterior frame body comprises a triangular plate portion integrally disposed over the upper ends of the central pillar and the left and right rear pillars.

5. The cabin of the construction machine according to Claim 2, wherein said one of the left and right sides provided with the central pillar of the posterior frame body includes an entrance for the cabin.

6. The cabin of the construction machine according to Claim 2, wherein the central pillar and the left and right rear pillars are disposed in a manner such that the posterior frame body does not form a right triangle in plan view.

7. The cabin of the construction machine according to Claim 6, wherein the central pillar and the left and right rear pillars are disposed in a manner such that the posterior frame body forms an isosceles triangle in plan view.

8. The cabin of the construction machine according to Claim 1, wherein a front side of the posterior frame body is provided with a first joint portion and a back side of the anterior frame body is provided with a second joint portion, the first and second joint portions extending in a horizontal direction and being joined to each other in an overlapping fashion to constitute the cabin frame such that an amount of overlap between the first and second joint portions is adjustable.

9. A cabin of a construction machine, wherein the cabin includes a cabin frame comprising:
a posterior frame body; and
an anterior frame body disposed in front of the posterior frame body,
wherein the anterior frame body defines a common element that is used in common between different machine models, and
wherein the posterior frame body defines a replaceable element having a predetermined strength selected from a plurality of strengths set for the corresponding machine models.

10. The cabin of the construction machine according to Claim 9, wherein the posterior frame body has sufficient strength for maintaining a housing space for an operator when the construction machine is involved in a rollover, and
wherein each body type of the posterior frame body defining the replaceable element has a strength determined based on a tare weight of the corresponding machine model.

11. The cabin of the construction machine according to Claim 9, wherein the posterior frame body of the cabin frame is formed of a steel material,
wherein an outer dimension of the steel material is the same between the different machine models, and
wherein a wall thickness of the steel material is different according to each of the different machine models.

12. The cabin of the construction machine according to Claim 9, wherein the posterior frame body of the cabin frame is formed of a steel material,
wherein an outer dimension of the steel material is the same between the different machine models, and
wherein the steel material is provided with a reinforcement member such that a cross-sectional strength of the steel material is different according to each of the different machine models.

13. The cabin of the construction machine according to Claim 9, wherein the posterior frame body includes at least a central pillar disposed at one of left and right sides of the cabin and in the middle of said one of left and right sides with respect to a front-back direction of the construction machine; left and right rear pillars respectively disposed at the left and right sides and positioned behind the central pillar with respect to the front-back direction; and a connection unit for connecting upper ends of the central pillar and the left and right rear pillars,
wherein the central pillar, the left and right rear pillars, and the connection unit of the posterior frame body constitute a portal-like structure that is triangular in plan view.

14. The cabin of the construction machine according to Claim 13, wherein said one of the left and right sides provided with the central pillar of the posterior frame body includes an entrance for the cabin.

15. The cabin of the construction machine according to Claim 13, wherein the central pillar and the left and right rear pillars are disposed in a manner such that the posterior frame body does not form a right triangle in plan view.

16. The cabin of the construction machine according to Claim 15, wherein the central pillar and the left and right rear pillars are disposed in a manner such that the posterior frame body forms an isosceles triangle in plan view.
